# EUROPÄISCHE PATENTSCHRIFT

(11) **EP 3 821 156 B1**
(45) Veröffentlichungstag und Bekanntmachung des Hinweises auf die Patenterteilung: **10.08.2022**
(21) Anmeldenummer: 19731172.3
(22) Anmeldetag: 06.06.2019
(51) Int. Cl.: F16H 25/20

(54) **ABGESTÜTZTE SPINDEL UND HERSTELLUNGSVERFAHREN FÜR EINE ABGESTÜTZTE SPINDEL**
SUPPORTED SPINDLE AND METHOD FOR PRODUCING A SUPPORTED SPINDLE
BROCHE SUPPORTÉE ET PROCÉDÉ DE FABRICATION D'UNE BROCHE SUPPORTÉE

(30) Priorität: 11.07.2018 DE 102018211552
(43) Veröffentlichungstag der Anmeldung: 19.05.2021
(73) Patentinhaber: Robert Bosch GmbH, 70442 Stuttgart (DE)
(72) Erfinder: NAGEL, Willi, 71686 Remseck/Hochdorf (DE); SCHUETZ, Henning, 74232 Abstatt (DE)
(86) Internationale Anmeldenummer: PCT/EP2019/064806
(87) Internationale Veröffentlichungsnummer: WO 2020/011456

(56) Entgegenhaltungen:
- WO-A1-2017/045805
- CN-U- 203 005 406
- DE-A1-102015 217 522
- ES-A1- 2 664 369

## Beschreibung

Die Erfindung betrifft eine abgestützte Spindel für eine mit einer Spindelmutter ausgestattete Vorrichtung. Ebenso betrifft die Erfindung eine Vorrichtung mit einer abgestützten Spindel und einer zusammenwirkenden Spindelmutter. Des Weiteren betrifft die Erfindung ein Herstellungsverfahren für eine abgestützte Spindel für eine mit einer Spindelmutter ausgestattete Vorrichtung.

### Stand der Technik

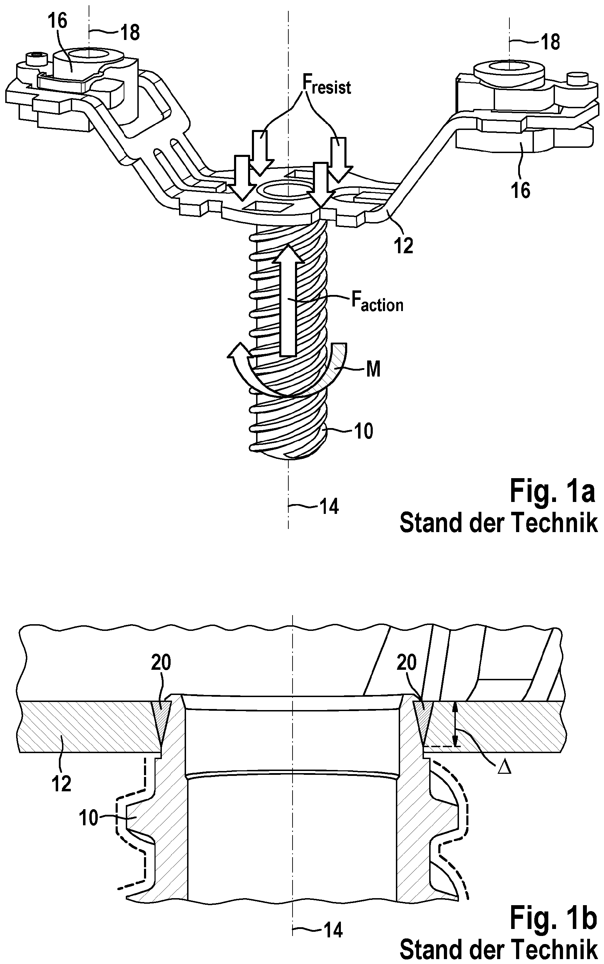

Fig. 1a und 1b zeigen schematische Gesamt- und Teildarstellungen einer herkömmlichen Spindel, wie sie beispielsweise in der DE 10 2015 217 522 A1 beschrieben ist.

Die in Fig. 1a und 1b schematisch wiedergegebene herkömmliche Spindel 10 ist zum Zusammenwirken mit einer (nicht dargestellten) Spindelmutter ausgebildet. An der herkömmlichen Spindel 10 ist außerdem eine Abstützplatte 12 festgeschweißt, mittels welcher die Spindel 10 drehfest gehalten ist. Darunter ist zu verstehen, dass bei einer mittels eines (nicht dargestellten) elektrischen Motors ausgelösten Rotation der Spindelmutter die herkömmliche Spindel 10 zusammen mit der Abstützplatte 12 entlang einer mittig durch die Spindel 10 verlaufenden Verstellachse 14 verstellt wird. Ein schematisch in Fig. 1a dargestelltes Drehmoment M des elektrischen Motors wird somit in eine entlang der Verstellachse 14 ausgerichtete Aktionskraft F_{action} umgewandelt.

Die mittels der Aktionskraft F_{action} bewirkte Verstellbewegung der herkömmlichen Spindel 10 und der Abstützplatte 12 entlang der Verstellachse 14 wird mittels zweier Führungsbuchsen 16, welche in die Abstützplatte 12 eingesetzt und auf je einem (schematisch wiedergegebenen) Führungsanker 18 verstellbar angeordnet sind, geführt. Mittels der Verstellbewegung der herkömmlichen Spindel 10 und der Abstützplatte 12 entlang der Verstellachse 14 kann beispielsweise mindestens ein (nicht dargestellter) verstellbarer Kolben mindestens einer Bremssystemkomponente eines hydraulischen oder pneumatischen Bremssystems entgegen mindestens einer druckbewirkten Gegenkraft Fᵣₑₛᵢₛₜ verstellt werden.

Fig. 1b zeigt eine beim Festschweißen der Abstützplatte 12 an der herkömmlichen Spindel 10 gebildete Schweißnaht 20, welche ringförmig um die Verstellachse 14 verläuft. Die gebildete Schweißnaht 20 erstreckt sich parallel zu der Verstellachse 14 mit einer Eindringtiefe durch die Abstützplatte 12, welche eine Anbindebreite Δ der Abstützplatte 12 an die herkömmliche Spindel 10 festlegt.

### Offenbarung der Erfindung

Die vorliegende Erfindung schafft eine abgestützte Spindel für eine mit einer Spindelmutter ausgestattete Vorrichtung mit den Merkmalen des Anspruchs 1, eine Vorrichtung mit den Merkmalen des Anspruchs 8 und ein Herstellungsverfahren für eine abgestützte Spindel für eine mit einer Spindelmutter ausgestattete Vorrichtung mit den Merkmalen des Anspruchs 10.

### Vorteile der Erfindung

Die vorliegende Erfindung schafft abgestützte Spindeln mit einer gegenüber dem Stand der Technik verbesserten Betriebsfestigkeit. Obwohl die Abstützplatte in der Regel zur verlässlichen Funktionserfüllung unter präziser Einhaltung ihrer Soll-Geometrie, und deshalb nur mit einer relativ geringen Blechdicke als Stanz-Biegeteil hergestellt wird, und obwohl eine kostengünstige Herstellung des Spindelkörpers mittels eines Rollierprozesses in Großserie eine ausreichende Umformbarkeit seines Materials erfordert, wird die Betriebsfestigkeit der abgestützten Spindel gemäß der vorliegenden Erfindung durch das zwischen der Abstützplatte und dem Spindelkörper eingeklemmte Ringelement gewährleistet. Damit kann bei der Herstellung von Abstützplatte und Spindelkörper problemlos auf hochfeste Werkstoffe verzichtet werden, und dennoch mittels des eingeklemmten Ringelements die gewünschte hohe Betriebsfestigkeit bewirkt werden. Mittels des eingeklemmten Ringelements kann außerdem ein Biegewiderstandsmoment der jeweiligen abgestützten Spindel deutlich gesteigert werden. Die Abstützplatte kann somit problemlos als Präzisionsteil mit einer relativ niedrigen Blechdicke ausgebildet werden, und trotzdem kann mittels des eingeklemmten Ringelements eine hohe Steifigkeit der abgestützten Spindel sichergestellt werden. Das Ringelement erhöht das Biegewiderstandmoment und schützt damit vor allem die Schweißnaht vor Verformungen und Querkräften. Dies verlängert eine Lebensdauer der jeweiligen abgestützten Spindel.

Ein weiterer Vorteil der erfindungsgemäßen Ausbildung von abgestützten Spindeln jeweils mit dem eingeklemmten Ringelement ist ein auf diese Weise verbesserter Schutz eines Spindelkörpergewindes des Spindelkörpers vor Schweißperlen beim Laserschweißen von Spindelkörper und Abstützplatte. Obwohl eine Eindringtiefe eines zum Laserschweißen verwendeten Laserstrahls mit einer hohen Streuung variieren kann, kann mittels des jeweiligen eingeklemmten Ringelements selbst bei einem Austritt einer Schmelze eine Kontaminierung des Spindelkörpergewindes des Spindelkörpers mit Schweißperlen verlässlich verhindert werden. Auch dies trägt zur Verbesserung einer Betriebsfestigkeit der abgestützten Spindeln gemäß der vorliegenden Erfindung bei.

In einer vorteilhaften Ausführungsform der abgestützten Spindel weist das Ringelement auf seiner zu der Abstützplatte ausgerichteten Seite mindestens eine Materialaufnahmevertiefung auf und ist vorgespannt zwischen der Abstützplatte und dem Spindelkörper festgepresst. Dies ermöglicht es, das Ringelement mit einer Vorspannung im Ringelement zwischen der Abstützplatte und dem Spindelkörper einzuschließen, wodurch ein sattes Anliegen von Kontaktflächen des Ringelements zur Abstützplatte gewährleistbar ist. Um eine Robustheit einer Verbindung des Ringelements zu der Abstützplatte zusätzlich zu steigern, bzw. um die Verbindung unempfindlich gegenüber Geometrieabweichungen auszubilden, kann das Ringelement axial vorgespannt werden. Dies kann beispielsweise durch Nutzung eines Pressverbunds oder eines Presssitzes zwischen Abstützplatte und Spindel bewirkt werden. Vorzugsweise weist das Ringelement auf seiner zu der Abstützplatte ausgerichteten Seite mindestens eine Entlastungsnut auf. Mittels der mindestens einen Entlastungsnut können Risse innerhalb des Ringelements verhindert werden. Mittels der mindestens einen Entlastungsnut kann die Betriebsfestigkeit dieser Ausführungsform der abgestützten Spindel somit zusätzlich gesteigert werden.

In einer weiteren vorteilhaften Ausführungsform der abgestützten Spindel ist die erste Kontaktfläche des Ringelements, welche die Abstützplatte kontaktiert, gerundet oder in einem ersten Neigungswinkel zwischen 15° und 75° zu der Mittellängsachse des Spindelkörpers ausgerichtet. Als Alternative oder als Ergänzung dazu kann auch die zweite Kontaktfläche des Ringelements, welche den Spindelkörper kontaktiert, gerundet oder in einem zweiten Neigungswinkel zwischen 15° und 75° zu der Mittellängsachse des Spindelkörpers ausgerichtet sein. Wie anhand der nachfolgenden Beschreibungen deutlich wird, kann mittels der so ausgebildeten ersten Kontaktfläche und/oder der entsprechenden zweiten Kontaktfläche ein Lastpfad für eine Axiallast derart durch das Ringelement geführt werden, dass eine Lebensdauer der hier beschriebenen Ausführungsformen von abgestützten Spindeln zusätzlich gesteigert ist.

Bevorzugter Weise verläuft die Schweißnaht in einem mittleren Abstand zu der Mittellängsachse des Spindelkörpers um die Mittellängsachse des Spindelkörpers, wobei der Spindelkörper an einem von dem Ringelement umrahmten Teilbereich einen Vorstand aufweist, welcher derart ausgebildet ist, dass mindestens eine um die Mittellängsachse des Spindelkörpers verlaufende Außenfläche des Vorstands einen Mindestabstand zu der Mittellängsachse des Spindelkörpers aufweist, welche größer als der mittlere Abstand der Schweißnaht zu der Mittellängsachse des Spindelkörpers ist. Wie unten genauer erläutert wird, kann ein unerwünschtes Anschweißen des Ringelements mittels der Ausbildung eines derartigen Vorstands verlässlich verhindert werden.

Als Alternative zu der zuvor beschriebenen Ausführungsform kann die Schweißnaht radial zu der Mittellängsachse des Spindelkörpers eine mittlere Breite aufweisen, wobei das Ringelement zwischen der Abstützplatte und dem Spindelkörper derart eingeklemmt ist, dass ein Luftspalt zwischen dem von dem Ringelement umrahmten Teilbereich des Spindelkörpers und dem Ringelement vorliegt, welcher radial zu der Mittellängsachse des Spindelkörpers eine mittlere Spaltbreite größer-gleich einem Viertel der mittleren Breite der Schweißnaht aufweist. Auch mittels der Gewährleistung eines derartigen Luftspalts zwischen dem von dem Ringelement umrahmten Teilbereich des Spindelkörpers und dem Ringelement kann das unerwünschte Anschweißen des Ringelements verlässlich verhindert werden.

Die vorausgehend beschriebenen Vorteile sind auch gewährleistet bei einer Vorrichtung mit einer derartigen abgestützten Spindel und einer Spindelmutter mit einem Spindelmuttergewinde, in welches ein Spindelkörpergewinde des Spindelkörpers eingreift, wobei der Spindelkörper mittels der Abstützplatte derart drehfest gehalten ist, dass die abgestützte Spindel mittels der in eine Rotation versetzten Spindelmutter entlang einer Verstellachse, auf welcher die Mittellängsachse des Spindelkörpers liegt, verstellbar sind. Die Vorrichtung kann beispielsweise eine an einem Rad eines Fahrzeugs anordbare oder angeordnete motorisierte Radbremsvorrichtung oder ein einem Hauptbremszylinder eines hydraulischen Bremssystems vorlagerbarer oder vorgelagerter elektromechanischer Bremskraftverstärker sein. Die vorliegende Erfindung kann somit vielseitig eingesetzt werden. Es wird jedoch ausdrücklich darauf hingewiesen, dass die hier genannten Beispiele für die mit der abgestützten Spindel ausgestattete Vorrichtung nicht abschließend zu interpretieren sind.

Des Weiteren schafft auch ein Ausführen eines korrespondierenden Herstellungsverfahrens für eine abgestützte Spindel für eine mit einer Spindelmutter ausgestattete Vorrichtung die oben schon erläuterten Vorteile. Es wird ausdrücklich darauf hingewiesen, dass das Herstellungsverfahren gemäß den oben erläuterten Ausführungsformen von abgestützten Spindeln und/oder damit bestückten Vorrichtungen weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: schematische Gesamt- und Teildarstellungen einer herkömmlichen Spindel;
- Fig. 2a und 2b: schematische Gesamt- und Teildarstellungen einer ersten Ausführungsform der abgestützten Spindel;
- Fig. 3a und 3b: schematische Gesamt- und Teildarstellungen einer zweiten Ausführungsform der abgestützten Spindel;
- Fig. 4: eine schematische Teildarstellung einer dritten Ausführungsform der abgestützten Spindel;
- Fig. 5: eine schematische Teildarstellung einer vierten Ausführungsform der abgestützten Spindel;
- Fig. 6: eine schematische Teildarstellung einer fünften Ausführungsform der abgestützten Spindel;
- Fig. 7: ein Flussdiagramm zum Erläutern einer ersten Ausführungsform des Herstellungsverfahrens für eine abgestützte Spindel für eine mit einer Spindelmutter ausgestattete Vorrichtung; und
- Fig. 8: eine schematische Teildarstellung einer mittels einer zweiten Ausführungsform des Herstellungsverfahrens hergestellten abgestützten Spindel.

### Ausführungsformen der Erfindung

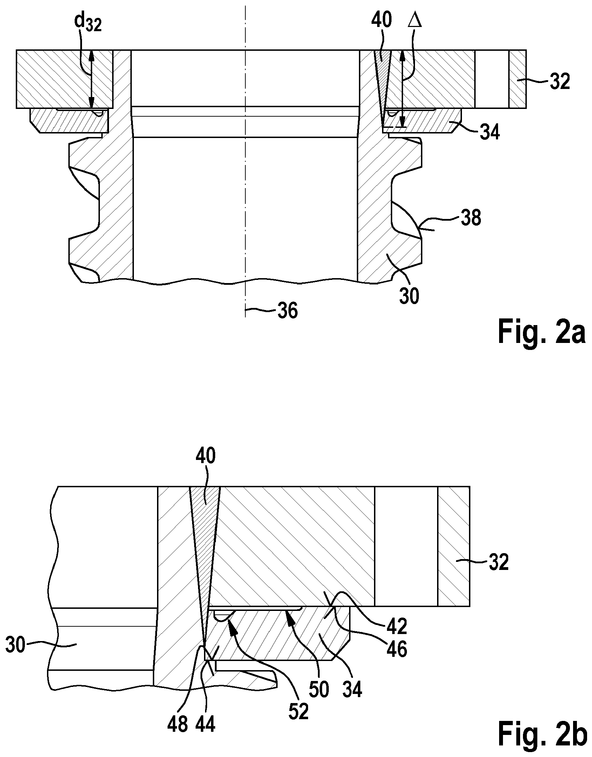

Fig. 2a und 2b zeigen schematische Gesamt- und Teildarstellungen einer ersten Ausführungsform der abgestützten Spindel.

Die in Fig. 2a und 2b schematisch dargestellte abgestützte Spindel umfasst einen Spindelkörper 30, eine Abstützplatte 32 und ein Ringelement 34. Die aus (zumindest) den Komponenten 30 bis 34 gebildete abgestützte Spindel kann damit auch als ein abgestütztes Spindelbauteil bezeichnet werden.

Die aus (zumindest) den Komponenten 30 bis 34 gebildete abgestützte Spindel ist zum Zusammenwirken mit einer (nicht dargestellten) Spindelmutter ausgebildet. Die abgestützte Spindel ist dazu in und/oder an einer mit der Spindelmutter ausgestatteten Vorrichtung montierbar. Der sich entlang seiner Mittellängsachse 36 erstreckende Spindelkörper 30 weist ein Spindelkörpergewinde 38 (als Außengewinde) auf, welches "spiralförmig" um die Mittellängsachse 36 des Spindelkörpers 30 verläuft und in welches ein Spindelmuttergewinde der Spindelmutter eingreifen kann.

Unter der Abstützplatte 32 ist eine Komponente zu verstehen, mittels welcher der Spindelkörper 30 nach der Anordnung der abgestützten Spindel in der mit der Spindelmutter ausgestatteten Vorrichtung drehfest gehalten ist. Die abgestützte Spindel wird deshalb bei einer (mittels eines Betriebs eines elektrischen Motors bewirkten) Rotation der Spindelmutter entlang einer Verstellachse, auf welcher die Mittellängsachse 36 des Spindelkörpers 30 liegt, verstellt. Die Abstützplatte 32 kann deshalb auch als eine Anti-Rotations-Platte (Anti Rotation Plate, ARP) bezeichnet werden. Trotz der Verwendung des Begriffs "Platte" für die Abstützplatte 32 muss unter Abstützplatte 32 kein glattes Element verstanden werden. Die Abstützplatte 32 kann beispielsweise auch eine gebogene Form, insbesondere eine gekröpfte Form, haben. Wahlweise kann auch mindestens eine Führungsbuchse, welche jeweils entlang eines ihr zugeordneten Führungsankers geführt ist, an der Abstützplatte 32 befestigbar/befestigt sein.

Die Abstützplatte 32 ist derart an dem Spindelkörper 30 festgeschweißt, dass eine (zumindest) zwischen dem Spindelkörper 30 und der Abstützplatte 32 ausgebildete Schweißnaht 40 um die Mittellängsachse 36 des Spindelkörpers 30 verläuft. Die einzelnen Sektoren der Schweißnaht 40 erstrecken sich parallel zu der Mittellängsachse 36 des Spindelkörpers 30 mit einer mittleren Ausdehnung, welche im Weiteren als eine Eindringtiefe der Schweißnaht 40 bezeichnet wird. Die Eindringtiefe der Schweißnaht 40 legt eine Anbindebreite Δ der Abstützplatte 32 an den Spindelkörper 30 fest. Bevorzugter Weise erfolgt das Festschweißen der Abstützplatte 32 mittels eines Laserstrahls, bzw. durch einen Laserschweißprozess.

Das Ringelement 34 umrahmt einen Teilabschnitt der Mittellängsachse 36 des Spindelkörpers 30. Das Ringelement 34 verläuft somit ringförmig um die Mittellängsachse 36 des Spindelkörpers 30. Allerdings muss unter dem Ringelement 34 keine Komponente mit einer "rein-ringförmigen Form" verstanden werden. Das Ringelement 34 kontaktiert an zumindest einer ersten Kontaktfläche 42 des Ringelements 34 die Abstützplatte 32 und an zumindest einer zweiten Kontaktfläche 44 des Ringelements 34 den Spindelkörper 30 derart, dass das Ringelement 34 zwischen der Abstützplatte 32 und dem Spindelkörper 30 eingeklemmt ist.

Das zwischen der Abstützplatte 32 und dem Spindelkörper 30 eingeklemmte Ringelement 34 bewirkt eine mechanische Verstärkung eines hochbelasteten Bereichs nahe an der Schweißnaht 40. Für den Spindelkörper 30 kann somit ein Werkstoff mit einer für einen Rollierprozess zur Herstellung des Spindelkörpers 30 in Großserie ausreichenden Umformbarkeit gewählt werden, wobei das Ringelement 34 trotzdem eine gewünschte Betriebsfestigkeit der abgestützten Spindel gewährleistet. Auch für die Abstützplatte 32 kann problemlos auf eine Verwendung eines hochfesten Materials verzichtet werden, da das Ringelement 34 eine ausreichende mechanische Verstärkung des hochbelasteten Bereichs benachbart zu der Schweißnaht 40 garantiert. Als Abstützplatte 32 kann deshalb auch ein kostengünstiges Stanz-Biegeteil eingesetzt werden. Außerdem ermöglicht die mittels des Ringelements 34 bewirkte mechanische Verstärkung des hochbelasteten Bereichs benachbart zu der Schweißnaht 40 eine Verringerung einer Dicke d₃₂ der Abstützplatte 32 parallel zu der Mittellängsachse 36 des Spindelkörpers 30. Die Verringerung der Dicke d₃₂ der Abstützplatte 32 erleichtert ein Einhalten einer Soll-Geometrie der Abstützplatte und ermöglicht damit eine verlässliche Herstellung der Abstützplatte 32 als Präzisionsteil.

Wie in Fig. 2b schematisch dargestellt ist, kann die Dicke d₃₂ der Abstützplatte 32 parallel zu der Mittellängsachse 36 des Spindelkörpers 30 sogar kleiner als die Eindringtiefe der Schweißnaht 40 zum Verschweißen der Abstützplatte 32 an dem Spindelkörper 30 sein. Mittels des Ringelements 34 kann selbst in diesem Fall eine Kontaminierung des Spindelkörpergewindes 38 mit Schweißperlen verlässlich verhindert werden. Außerdem kann das Ringelement 34 beim Verschweißen der Abstützplatte 32 an dem Spindelkörper 30 mitverschweißt werden, so dass sich die Schweißnaht 40 gegebenenfalls in das Ringelement 34 erstreckt. Die Anbindebreite Δ der Abstützplatte 32 an den Spindelkörper 30 kann somit größer als die Dicke d₃₂ der Abstützplatte 32 sein, wodurch eine Steifigkeit der abgestützten Spindel zusätzlich erhöht ist.

In dem Beispiel der Fig. 2a und 2b sind die erste Kontaktfläche 42 und die zweite Kontaktfläche 44 des zwischen der Abstützplatte 32 und dem Spindelkörper 30 eingeklemmten Ringelements 34 senkrecht zu der Mittellängsachse 36 des Spindelkörpers 30 ausgerichtet. Damit kontaktiert die erste Kontaktfläche 42 des Ringelements 44 eine erste Gegenkontaktfläche 46 der Abstützplatte 32, welche ebenfalls senkrecht zu der Mittellängsachse 36 des Spindelkörpers 30 ausgerichtet ist. Entsprechend kontaktiert die zweite Kontaktfläche 44 des Ringelements 34 eine senkrecht zu der Mittellängsachse 36 des Spindelkörpers 30 ausgerichtete zweite Gegenkontaktfläche 48 des Spindelkörpers 30. Sofern sich die Schweißnaht 40 in das Ringelement 34 erstreckt, kann die zweite Kontaktfläche 44 des Ringelements 34 (und entsprechend die zweite Gegenkontaktfläche 48) auch eine Grenzfläche eines Stoffschlusses/einer Schweißnahtverbindung zwischen Ringelement 34 und Spindelkörper 30 sein. Gegebenenfalls kann die Schweißnaht 40 ausreichend zum Halten des Ringelements 34 an den Spindelkörper 30 sein, so dass auf die Ausbildung von "sich berührenden Außenflächen" des Ringelements 34 und des Spindelkörpers 30 als Kontakt- und Gegenkontaktflächen 44 und 48 verzichtet werden kann. In der Ausführungsform der Fig. 2a und 2b weist das Ringelement 34 auf seiner zu der Abstützplatte 32 ausgerichteten Seite mindestens eine Materialaufnahmevertiefung 50 auf. Das Ringelement 34 kann somit vorgespannt zwischen der Abstützplatte 32 und dem Spindelkörper 30 festgepresst werden, wobei ein auf diese Weise bewirkter Materialüberstand an der Abstützplatte 32 in die Materialaufnahmevertiefung 50 einbringbar ist. Des Weiteren weist das Ringelement 34 auf seiner zu der Abstützplatte 32 ausgerichteten Seite noch mindestens eine Entlastungsnut 52 auf, mittels welcher Risse in dem Ringelement 34 verlässlich verhinderbar sind.

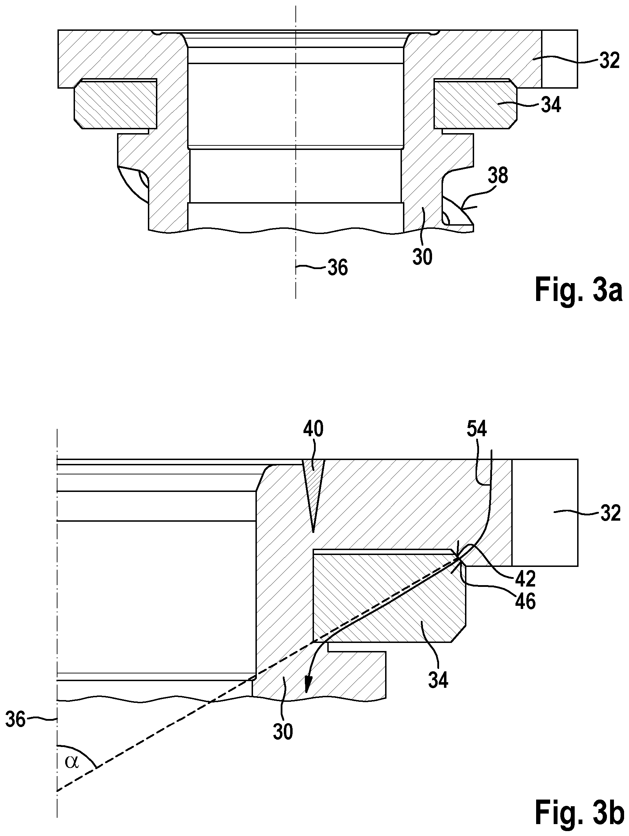

Fig. 3a und 3b zeigen schematische Gesamt- und Teildarstellungen einer zweiten Ausführungsform der abgestützten Spindel.

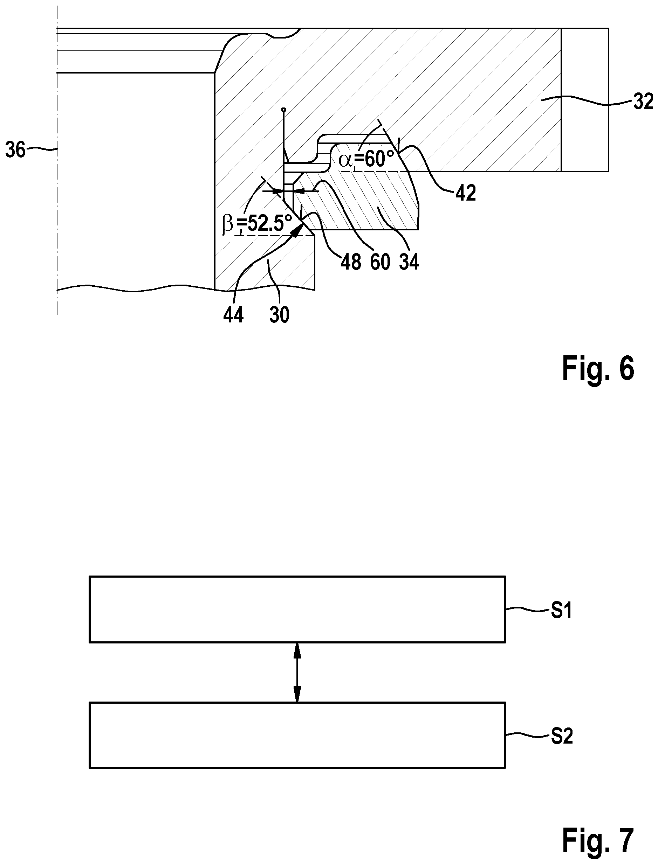

Die in Fig. 3a und 3b schematisch wiedergegebene abgestützte Spindel aus (zumindest) den Komponenten 30 bis 34 unterscheidet sich von der zuvor beschriebenen Ausführungsform vor allem in der ersten Kontaktfläche 42 ihres Ringelements 34, welche die erste Gegenkontaktfläche 46 der Abstützplatte 32 kontaktiert, und welche in einem ersten Neigungswinkel/einer ersten Schräge α zwischen 15° und 75° zu der Mittellängsachse 36 des Spindelkörpers 30 ausgerichtet ist. Damit kann eine Krafteinleitung von der Abstützplatte 32 in das Ringelement über einen zwischen der Abstützplatte 32 und dem Ringelement 34 vorliegenden Radius-Flächenkontakt mit dem ersten Neigungswinkel a erfolgen. Die erste Kontaktfläche 42 des Ringelements 34 kann insbesondere in einem ersten Neigungswinkel α zwischen 25° bis 65°, speziell in einem ersten Neigungswinkel α zwischen 35° und 55° oder zwischen 50° und 70° (siehe Fig. 6), zu der Mittellängsachse 36 des Spindelkörpers 30 ausgerichtet sein. Wahlweise kann die erste Kontaktfläche 42 des Ringelements 34 auch gerundet/ausgewölbt sein. Entsprechend kann auch die erste Gegenkontaktfläche 46 der Abstützplatte 32 in dem ersten Neigungswinkel α zwischen 15° und 75°, z.B. in dem ersten Neigungswinkel α zwischen 25° bis 65°, speziell in dem ersten Neigungswinkel α zwischen 35° und 55° oder zwischen 50° und 70°, oder gerundet/eingewölbt zu der Mittellängsachse 36 des Spindelkörpers 30 ausgerichtet sein.

In dem Beispiel der Fig. 3a und 3b sind die erste Kontaktfläche 42 des Ringelements 34 und die erste Gegenkontaktfläche 46 der Abstützplatte 32 beispielhaft in einem ersten Neigungswinkel/einer ersten Schräge α von 45° zu der Mittellängsachse 36 des Spindelkörpers geneigt. Wie in Fig. 3b erkennbar ist, kann sich die Abstützplatte 32 bei einem derartigen Ringdesign des Ringelements 34 besonders effektiv an dem Ringelement 34 abstützen, wobei eine Biegebelastung in eine Druckbelastung umgewandelt und entlang eines in Fig. 3b wiedergegebenen Lastpfads 54 (für eine Axiallast) in den Spindelkörper 30 eingeleitet wird. Dies bewirkt eine Steigerung einer Festigkeit der abgestützten Spindel, welche beispielsweise eine Minimierung der Anbindebreite Δ, bzw. eine Minimierung der Eindringtiefe der Schweißnaht 40 ermöglicht.

Um eine Robustheit der abgestützten Spindel zusätzlich zu steigern, bzw. unempfindlich gegenüber Geometrieabweichungen zu bewirken, kann das Ringelement 34 axial vorgespannt sein. Dies kann beispielsweise mittels eines Pressverbunds oder eines Presssitzes zwischen der Abstützplatte 32 und dem Spindelkörper 30 bewirkt werden.

Bezüglich weiterer Eigenschaften der abgestützten Spindel der Fig. 3a und 3b wird auf die zuvor beschriebene Ausführungsform verwiesen.

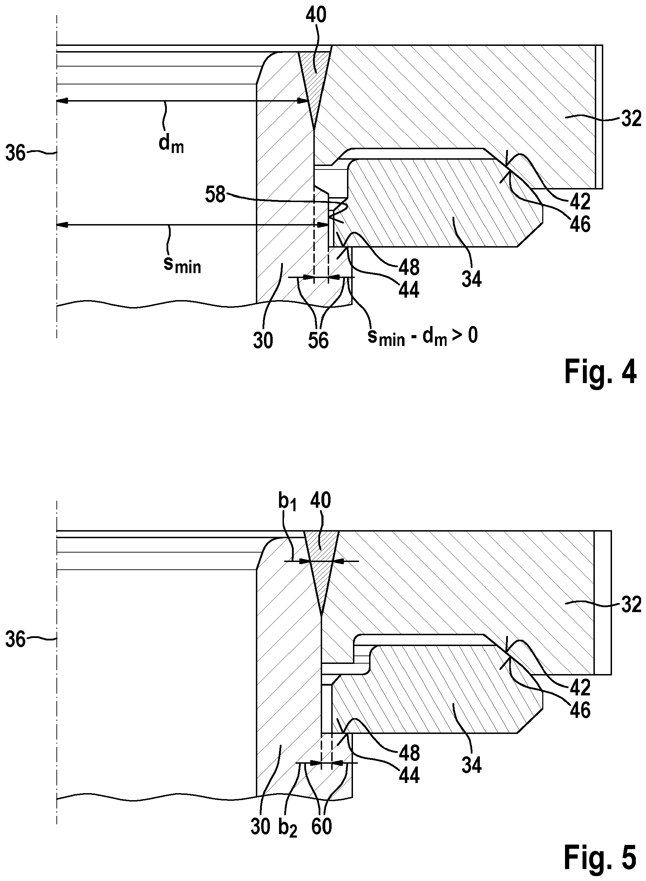

Fig. 4 zeigt eine schematische Teildarstellung einer dritten Ausführungsform der abgestützten Spindel.

Auch die abgestüzte Spindel der Fig. 4 weist (zumindest) die Komponenten 30 bis 34 auf, wobei die Abstützplatte 32 unter Bildung der Schweißnaht 40 an dem Spindelkörper 30 festgeschweißt ist. Wie in Fig. 4 erkennbar ist, verläuft die Schweißnaht 40 um die Mittellängsachse 36 des Spindelkörpers 30 in einem mittleren Abstand dₘ zu der Mittellängsachse 36 des Spindelkörpers 30. Der mittlere Abstand dₘ der Schweißnaht 40 zu der Mittellängsachse 36 des Spindelkörpers 30 kann auch als ein mittlerer Radius der Schweißnaht 40 bezeichnet werden.

Als vorteilhafte Weiterbildung weist der Spindelkörper 30 an seinem von dem Ringelement 34 umrahmten Teilbereich einen Vorstand/Vorsprung 56 auf. Unter dem Vorstand 56 kann beispielsweise eine vorstehende Stufe oder eine vorstehende Wölbung an einer ringförmig um die Mittellängsachse 36 des Spindelkörpers 30 verlaufende Außenseite des von dem Ringelement 34 umrahmten Teilbereichs des Spindelkörpers 30 verstanden werden. Der Vorstand 56 ist derart ausgebildet, dass mindestens eine um die Mittellängsachse 36 des Spindelkörpers 30 verlaufende Außenfläche 58 des Vorstands 56 einen Mindestabstand sₘᵢₙ zu der Mittellängsachse 36 des Spindelkörpers 30 aufweist, welche größer als der mittlere Abstand dₘ der Schweißnaht 40 zu der Mittellängsachse 36 des Spindelkörpers 30 ist.

Mittels des Vorstands 56 kann in diesem Fall ein Anschweißen des Ringelements 34 verlässlich verhindert werden. Selbst wenn eine Einbringtiefe des zum Anschweißen der Abstützplatte 32 an dem Spindelkörper 30 eingesetzten Laserstrahls stark schwankt und somit die Eindringtiefe der Schweißnaht 40 größer als die Dicke d₃₂ der Abstützplatte 32 parallel zu der Mittellängsachse 36 des Spindelkörpers 30 sein kann, ist ein Festschweißen des Ringelements 34 noch konstruktiv verhindert. Man kann dies auch damit umschreiben, dass mittels des Vorstands 56 ein ausreichender Versatz zwischen dem Ringelement 34 und dem Spindelkörper 30 sicherstellbar ist.

Bezüglich weiterer Merkmale der abgestützten Spindel der Fig. 4 wird auf die zuvor beschriebenen Ausführungsformen verwiesen.

Fig. 5 zeigt eine schematische Teildarstellung einer vierten Ausführungsform der abgestützten Spindel.

Auch die in Fig. 5 schematisch dargestellte abgestützte Spindel umfasst (zumindest) die Komponenten 30 bis 34, wobei die Schweißnaht 40 zwischen der Abstützplatte 42 und dem Spindelkörper 30 ausgebildet ist. Die Schweißnaht 40 weist radial zu der Mittellängsachse 36 des Spindelkörpers 30 eine mittlere Breite b₁ auf.

Bei der abgestützten Spindel der Fig. 5 ist das Ringelement 34 zwischen der Abstützplatte 32 und dem Spindelkörper 30 derart eingeklemmt, dass ein Luftspalt 60 zwischen dem von dem Ringelement 34 umrahmten Teilbereich des Spindelkörpers 30 und dem Ringelement 34 vorliegt. Der Luftspalt 60 weist radial zu der Mittellängsachse 36 des Spindelkörpers 30 eine mittlere Spaltbreite b₂ größer-gleich einem Viertel der mittleren Breite b₁ der Schweißnaht 40 auf. Die mittlere Spaltbreite b₂ des Luftspalts 60 kann beispielsweise mindestens gleich einem Drittel der mittleren Breite b₁ der Schweißnaht 60, bevorzugt mindestens gleich einer Hälfte der mittleren Breite b₁ der Schweißnaht 60, speziell mindestens gleich drei Viertel der mittleren Breite b₁ der Schweißnaht 60, sein. Der derart ausgebildete Luftspalt 60 ist ausreichend dimensioniert um ein Verschweißen des Ringelements 34 an dem Spindelkörper 30 zu verhindern. Bezüglich weiterer Eigenschaften der abgestützten Spindel der Fig. 5 wird auf die zuvor beschriebenen Ausführungsformen verwiesen.

Fig. 6 zeigt eine schematische Teildarstellung einer fünften Ausführungsform der abgestützten Spindel.

Bei der in Fig. 6 schematisch wiedergegebene abgestützten Spindel ist auch die zweite Kontaktfläche 44 des Ringelements 34, welche die zweite Gegenkontaktfläche 48 des Spindelkörpers 30 kontaktiert, in einem zweiten Neigungswinkel/einer zweiten Schräge β zwischen 15° und 75° zu einer senkrecht zu der Mittellängsachse 36 des Spindelkörpers 30 verlaufenden Referenzachse ausgerichtet. Damit kann eine Krafteinleitung von dem Ringelement 34 in den Spindelkörper 30 über einen zwischen dem Ringelement 34 und dem Spindelkörper 30 vorliegenden Radius-Flächenkontakt mit dem zweiten Neigungswinkel β erfolgen. Die zweite Kontaktfläche 44 des Ringelements 34 kann insbesondere in einem zweiten Neigungswinkel β zwischen 30° bis 70°, speziell in einem zweiten Neigungswinkel β zwischen 40° und 60°, zu der Referenzachse ausgerichtet sein. Wahlweise kann die zweite Kontaktfläche 44 des Ringelements 34 auch gerundet/ausgewölbt sein. Entsprechend kann auch die zweite Gegenkontaktfläche 48 des Spindelkörpers 30 in dem zweiten Neigungswinkel β zwischen 15° und 75°, z.B. in dem zweiten Neigungswinkel β zwischen 30° bis 70°, speziell in dem zweiten Neigungswinkel β zwischen 40° und 60°, oder gerundet/eingewölbt zu der Referenzachse ausgerichtet sein. In dem Beispiel der Fig. 6 sind die zweite Kontaktfläche 44 des Ringelements 34 und die zweite Gegenkontaktfläche 48 des Spindelkörpers 30 um einen zweiten Neigungswinkel β von 52,5° zu der Referenzachse geneigt.

Zusätzlich zu dem zwischen dem Ringelement 34 und dem Spindelkörper 30 vorliegenden Radius-Flächenkontakt mit dem zweiten Neigungswinkel β kann auch ein weiterer Radius-Flächenkontakt zwischen der Abstützplatte 32 und dem Ringelement 34 mit einem ersten Neigungswinkel α zwischen 15° und 75° zu der Referenzachse vorliegen. Die Radius-Flächenkontakte bewirken eine Kompensation von Toleranzen.

In der Ausführungsform der Fig. 6 sind die erste Kontaktfläche 42 und die erste Gegenkontaktfläche 46 mit einem ersten Neigungswinkel α von 60° zu der Referenzachse vergleichsweise steil ausgebildet. Das Design des Ringelements 34 der Fig. 6 kann deshalb als ein Konusringdesign umschrieben werden. Die hier beschriebene Winkelkombination des ersten Neigungswinkels α gleich 60° zu der Referenzachse und des zweiten Neigungswinkels β gleich 52,5° zu der Referenzachse ist besonders vorteilhaft, da diese Neigungswinkel α und β Relativbewegungen der Komponenten 30 bis 34 verhindern und dadurch eine Geräuscherzeugung durch "Reiben" unterbinden.

Als Alternative zu dem in Fig. 6 dargestellten Luftspalt 60 kann auch der oben beschriebene Vorstand an dem Spulenkörper 30 der hier erläuterten abgestützten Spindel ausgebildet sein. Es wird nochmals daran erinnert, dass sowohl der Luftspalt 60 als auch der Vorstand ein unerwünschtes Anschweißen des Ringelements 34 während des Verschweißens der Abstützplatte 32 an dem Spulenkörper 30 verlässlich verhindern können.

Alle oben beschriebenen abgestützten Spindeln können in einer Vorrichtung eingesetzt werden, welche z.B. eine an einem Rad eines Fahrzeugs anordbare oder angeordnete Radbremsvorrichtung oder ein einem Hauptbremszylinder eines hydraulischen Bremssystems vorlagerbarer oder vorgelagerter elektromechanischer Bremskraftverstärker sein kann. Die hier genannten Beispiele für die Vorrichtung sind jedoch nicht abschließend zu interpretieren.

Fig. 7 zeigt ein Flussdiagramm zum Erläutern einer Ausführungsform des Herstellungsverfahrens für eine abgestützte Spindel für eine mit einer Spindelmutter ausgestattete Vorrichtung.

Mittels des im Weiteren beschriebenen Herstellungsverfahrens können beispielsweise die oben erläuterten abgestützten Spindeln hergestellt werden. Eine Ausführbarkeit des Herstellungsverfahrens ist jedoch nicht auf das Herstellen dieser abgestützten Spindeln beschränkt.

In einem Verfahrensschritt S1 des Herstellungsverfahrens wird ein sich entlang seiner Mittellängsachse erstreckender Spindelkörper der späteren abgestützten Spindel derart an einer Abstützplatte festgeschweißt, dass eine um die Mittellängsachse des Spindelkörpers verlaufende Schweißnaht zwischen dem Spindelkörper und der Abstützplatte gebildet wird. Der Verfahrensschritt S1 wird bevorzugt mittels eines Laserschweißens ausgeführt.

Zusammen mit dem Verfahrensschritt S1 wird auch ein Verfahrensschritt S2 ausgeführt, ein einen Teilabschnitt der Mittellängsachse des Spindelkörpers umrahmendes Ringelement, welches an zumindest einer ersten Kontaktfläche des Ringelements die Abstützplatte und an zumindest einer zweiten Kontaktfläche des Ringelements den Spindelkörper kontaktiert, zwischen der Abstützplatte und dem Spindelkörper eingeklemmt wird. Vorzugsweise wird mittels des Laserschweißens eine Verspannung/ein Verzwängen des Ringelements bewirkt, wodurch eine Robustheit der hergestellten abgestützten Spindel zusätzlich gesteigert wird.

Um eine Robustheit der hergestellten abgestützten Spindel zusätzlich zu steigern, kann das Ringelement axial vorgespannt werden. Die axiale Vorspannung kann beispielsweise mittels eines Pressverbunds/eines Presssitzes zwischen der Abstützplatte und dem Spindelkörper bewirkt werden.

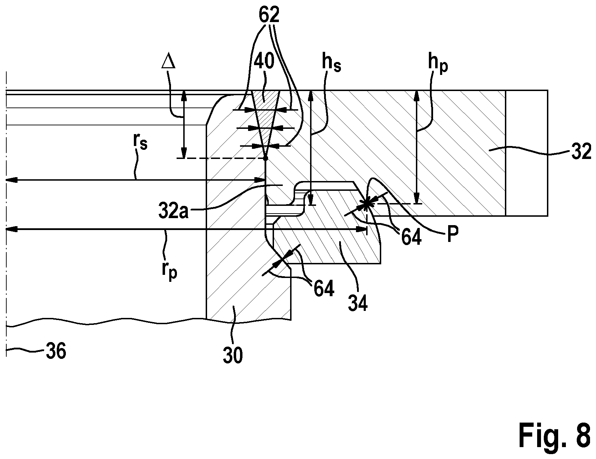

Fig. 8 zeigt eine schematische Teildarstellung einer mittels einer zweiten Ausführungsform des Herstellungsverfahrens hergestellten abgestützten Spindel.

Auch bei der mittels der Fig. 8 wiedergegebenen Ausführungsform des Herstellungsverfahrens werden die zuvor beschriebenen Verfahrensschritte ausgeführt, wobei nach dem Laserschweißen zugelassen wird, dass eine zum Laserschweißen verwendete und anschließend erstarrende Schmelze "schrumpft". Das "Schrumpfen" der erstarrenden Schmelze trägt zur weiteren Steigerung einer Robustheit der hergestellten abgestützten Spindel bei. Insbesondere induziert das "Schrumpfen" der erstarrenden Schmelze eine Flächenpressung an den Kontaktflächen 42 und 44 (bzw. den Gegenkontaktflächen 46 und 48), so dass die Komponenten 30 bis 34 "satt" aneinander anliegen.

Das "Schrumpfen" der erstarrenden Schmelze wird zugelassen, indem die ersten/zweiten Kontaktflächen 42 und 44 des Ringelements 34 in einem ersten/zweiten Neigungswinkel α und β 15° bis 75° zu der Mittellängsachse 36 des Spindelkörpers 30 ausgerichtet werden. Ein gewünschter Kontaktpunkt P zwischen der ersten Kontaktfläche 42 des Ringelements 34 und der Abstützplatte 32 wird gewählt, wobei für den Kontaktpunkt P eine Kontaktpunkthöhe hp als Abstand des Kontaktpunkts P zu einer von dem Ringelement 34 weg gerichteten Seite der Abstützplatte 32 und ein als Kontaktpunktradius rp bezeichneter Abstand von der Mittellängsachse 36 des Spindelkörpers 30 definierbar sind. Ein später den Spindelkörper 30 kontaktierender Kontaktbereich 32a der Abstützplatte 32 wird als Trennfuge ausgebildet, wobei für die Trennfuge eine Trennfugenhöhe hs zu der von dem Ringelement 34 weg gerichteten Seite der Abstützplatte 32 und ein als Trennfugenradius rs bezeichneter Abstand von der Mittellängsachse 36 des Spindelkörpers 30 definierbar sind. Das "Schrumpfen" der erstarrenden Schmelze kann verlässlich zur Robustheitssteigerung genutzt werden, sofern die Kontaktpunkthöhe hp in einem Bereich zwischen 50% bis 150% der Trennfugenhöhe hₛ und der Kontaktpunktradius rp in einem Bereich zwischen 100% bis 200% des Trennfugenradius rs liegen. Die Pfeile 62 geben eine Schrumpfrichtung des Materials nach dem Laserschweißen wieder, während mittels der Pfeile 64 die auf diese Weise induzierte Flächenpressung angezeigt ist. Außerdem ist es vorteilhaft, wenn die Anbindebreite Δ mindestens 30% der Trennfugenhöhe hs einnimmt.

## Patentansprüche

1. Abgestützte Spindel für eine mit einer Spindelmutter ausgestattete Vorrichtung mit:
einem sich entlang seiner Mittellängsachse (36) erstreckenden Spindelkörper (30); und
einer Abstützplatte (32), welche an dem Spindelkörper (30) derart festgeschweißt ist, dass eine zwischen dem Spindelkörper (30) und der Abstützplatte (32) ausgebildete Schweißnaht (40) um die Mittellängsachse (36) des Spindelkörpers (30) verläuft;
**gekennzeichnet durch**
ein einen Teilabschnitt der Mittellängsachse (36) des Spindelkörpers (30) umrahmendes Ringelement (34), welches an zumindest einer ersten Kontaktfläche (42) des Ringelements (34) die Abstützplatte (32) und an zumindest einer zweiten Kontaktfläche (44) des Ringelements (34) den Spindelkörper (30) derart kontaktiert, dass das Ringelement (34) zwischen der Abstützplatte (32) und dem Spindelkörper (30) eingeklemmt ist.

2. Abgestützte Spindel nach Anspruch 1, wobei das Ringelement (34) auf seiner zu der Abstützplatte (32) ausgerichteten Seite mindestens eine Materialaufnahmevertiefung (50) aufweist und vorgespannt zwischen der Abstützplatte (32) und dem Spindelkörper (30) festgepresst ist.

3. Abgestützte Spindel nach Anspruch 1 oder 2, wobei das Ringelement (34) auf seiner zu der Abstützplatte (32) ausgerichteten Seite mindestens eine Entlastungsnut (52) aufweist.

4. Abgestützte Spindel nach einem der vorhergehenden Ansprüche, wobei die erste Kontaktfläche (42) des Ringelements (34), welche die Abstützplatte (32) kontaktiert, gerundet oder in einem ersten Neigungswinkel (a) zwischen 15° und 75° zu der Mittellängsachse (36) des Spindelkörpers (30) ausgerichtet ist.

5. Abgestützte Spindel nach einem der vorhergehenden Ansprüche, wobei die zweite Kontaktfläche (44) des Ringelements (34), welche den Spindelkörper (30) kontaktiert, gerundet oder in einem zweiten Neigungswinkel (β) zwischen 15° und 75° zu der Mittellängsachse (36) des Spindelkörpers (30) ausgerichtet ist.

6. Abgestützte Spindel nach einem der vorhergehenden Ansprüche, wobei die Schweißnaht (40) in einem mittleren Abstand (dₘ) zu der Mittellängsachse (36) des Spindelkörpers (30) um die Mittellängsachse (36) des Spindelkörpers (30) verläuft, und wobei der Spindelkörper (30) an einem von dem Ringelement (34) umrahmten Teilbereich einen Vorstand (56) aufweist, welcher derart ausgebildet ist, dass mindestens eine um die Mittellängsachse (36) des Spindelkörpers (30) verlaufende Außenfläche (58) des Vorstands (56) einen Mindestabstand (sₘᵢₙ) zu der Mittellängsachse (36) des Spindelkörpers (30) aufweist, welche größer als der mittlere Abstand (dₘ) der Schweißnaht (40) zu der Mittellängsachse (36) des Spindelkörpers (30) ist.

7. Abgestützte Spindel nach einem der Ansprüche 1 bis 5, wobei die Schweißnaht (40) radial zu der Mittellängsachse (36) des Spindelkörpers (30) eine mittlere Breite (b₁) aufweist, und wobei das Ringelement (34) zwischen der Abstützplatte (32) und dem Spindelkörper (30) derart eingeklemmt ist, dass ein Luftspalt (60) zwischen dem von dem Ringelement (34) umrahmten Teilbereich des Spindelkörpers (30) und dem Ringelement (34) vorliegt, welcher radial zu der Mittellängsachse (36) des Spindelkörpers (30) eine mittlere Spaltbreite (b₂) größer-gleich einem Viertel der mittleren Breite (b₁) der Schweißnaht (40) aufweist.

8. Vorrichtung mit:
einer abgestützten Spindel nach einem der vorhergehenden Ansprüche; und
einer Spindelmutter mit einem Spindelmuttergewinde, in welches ein Spindelkörpergewinde (38) des Spindelkörpers (30) eingreift;
wobei der Spindelkörper (30) mittels der Abstützplatte (32) derart drehfest gehalten ist, dass die abgestützte Spindel mittels der in eine Rotation versetzten Spindelmutter entlang einer Verstellachse, auf welcher die Mittellängsachse (36) des Spindelkörpers (30) liegt, verstellbar sind.

9. Vorrichtung nach Anspruch 8, wobei die Vorrichtung eine an einem Rad eines Fahrzeugs anordbare oder angeordnete Radbremsvorrichtung oder ein einem Hauptbremszylinder eines hydraulischen Bremssystems vorlagerbarer oder vorgelagerter elektromechanischer Bremskraftverstärker ist.

10. Herstellungsverfahren für eine abgestützte Spindel für eine mit einer Spindelmutter ausgestattete Vorrichtung mit den Schritten:
Festschweißen eines sich entlang seiner Mittellängsachse (36) erstreckenden Spindelkörpers (30) der späteren abgestützten Spindel derart an einer Abstützplatte (32), dass eine um die Mittellängsachse (36) des Spindelkörpers (30) verlaufende Schweißnaht (40) zwischen dem Spindelkörper (30) und der Abstützplatte (32) gebildet wird (S1);
**gekennzeichnet durch** den Schritt:
Einklemmen eines einen Teilabschnitt der Mittellängsachse (36) des Spindelkörpers (30) umrahmenden Ringelements (34), welches an zumindest einer ersten Kontaktfläche (42) des Ringelements (34) die Abstützplatte (32) und an zumindest einer zweiten Kontaktfläche (44) des Ringelements (34) den Spindelkörper (30) kontaktiert, zwischen der Abstützplatte (32) und dem Spindelkörper (30) (S2).

## Claims

1. Supported spindle for a device equipped with a spindle nut, having:
a spindle body (30) extending along its longitudinal centre axis (36); and
a support plate (32) which is firmly welded to the spindle body (30) such that a weld seam (40) formed between the spindle body (30) and the support plate (32) extends about the longitudinal centre axis (36) of the spindle body (30);
**characterized by**
a ring element (34) which borders a section of the longitudinal centre axis (36) of the spindle body (30) and comes into contact with the support plate (32) at at least a first contact face (42) of the ring element (34) and with the spindle body (30) at at least a second contact face (44) of the ring element (34) such that the ring element (34) is clamped in place between the support plate (32) and the spindle body (30).

2. Supported spindle according to Claim 1, wherein the ring element (34) has at least one material receiving recess (50) on its side oriented towards the support plate (32) and is firmly pressed under preload between the support plate (32) and the spindle body (30).

3. Supported spindle according to Claim 1 or 2, wherein the ring element (34) has at least one relief groove (52) on its side oriented towards the support plate (32) .

4. Supported spindle according to one of the preceding claims, wherein the first contact face (42) of the ring element (34), which comes into contact with the support plate (32), is rounded or oriented at a first inclination angle (α) of between 15° and 75° to the longitudinal centre axis (36) of the spindle body (30).

5. Supported spindle according to one of the preceding claims, wherein the second contact face (44) of the ring element (34), which comes into contact with the spindle body (30), is rounded or oriented at a second inclination angle (β) of between 15° and 75° to the longitudinal centre axis (36) of the spindle body (30).

6. Supported spindle according to one of the preceding claims, wherein the weld seam (40) extends about the longitudinal centre axis (36) of the spindle body (30) at an average distance (dₘ) from the longitudinal centre axis (36) of the spindle body (30), and wherein the spindle body (30) has a protrusion (56) in a subregion bordered by the ring element (34), said protrusion (56) being formed such that at least one outer face (58) of the protrusion (56), extending about the longitudinal centre axis (36) of the spindle body (30), is at a minimum distance (sₘᵢₙ) from the longitudinal centre axis (36) of the spindle body (30) that is greater than the average distance (dₘ) of the weld seam (40) from the longitudinal centre axis (36) of the spindle body (30).

7. Supported spindle according to one of Claims 1 to 5, wherein the weld seam (40) has an average width (b₁) radially with respect to the longitudinal centre axis (36) of the spindle body (30), and wherein the ring element (34) is clamped in place between the support plate (32) and the spindle body (30) such that an air gap (60) is present between the subregion of the spindle body (30) that is framed by the ring element (34) and the ring element (34), said air gap (60) having an average gap width (b₂), radially with respect to the longitudinal centre axis (36) of the spindle body (30), that is greater than or equal to a quarter of the average width (b₁) of the weld seam (40) .

8. Device having:
a supported spindle according to one of the preceding claims; and
a spindle nut having a spindle nut thread in which a spindle body thread (38) of the spindle body (30) engages;
wherein the spindle body (30) is held in a rotationally fixed manner by means of the support plate (32) such that the supported spindle is adjustable by means of the spindle nut, set in rotation, along an adjustment axis on which the longitudinal centre axis (36) of the spindle body (30) lies.

9. Device according to Claim 8, wherein the device is a wheel braking device that is arranged or arrangeable on a wheel of a vehicle or is an electromechanical brake booster that is located or able to be located in front of a main brake cylinder of a hydraulic brake system.

10. Method for producing a supported spindle for a device equipped with a spindle nut, having the steps of:
firmly welding a spindle body (30), extending along its longitudinal centre axis (36), of the subsequently supported spindle to a support plate (32) such that a weld seam (40) extending about the longitudinal centre axis (36) of the spindle body (30) is formed between the spindle body (30) and the support plate (32) (S1);
**characterized by** the step of:
clamping a ring element (34), which borders a section of the longitudinal centre axis (36) of the spindle body (30) and comes into contact with the support plate (32) at at least a first contact face (42) of the ring element (34) and with the spindle body (30) at at least a second contact face (44) of the ring element (34), in place between the support plate (32) and the spindle body (30) (S2).

## Revendications

1. Broche supportée pour un dispositif équipé d'un écrou de broche, comportant :
un corps de broche (30) s'étendant le long de son axe médian longitudinal (36) ; et
une plaque de support (32), laquelle est soudée sur le corps de broche (30) de telle sorte qu'un joint de soudure (40) formé entre le corps de broche (30) et la plaque de support (32) s'étende autour de l'axe médian longitudinal (36) du corps de broche (30) ;
**caractérisée par**
un élément annulaire (34) encadrant une section partielle de l'axe médian longitudinal (36) du corps de broche (30), lequel élément annulaire vient en contact avec la plaque de support (32) sur au moins une première surface de contact (42) de l'élément annulaire (34) et avec le corps de broche (30) sur au moins une deuxième surface de contact (44) de l'élément annulaire (34), de telle sorte que l'élément annulaire (34) soit serré entre la plaque de support (32) et le corps de broche (30).

2. Broche supportée selon la revendication 1, l'élément annulaire (34) comportant, sur son côté orienté vers la plaque de support (32), au moins un évidement de réception de matière (50) et étant pressé de manière précontrainte entre la plaque de support (32) et le corps de broche (30).

3. Broche supportée selon la revendication 1 ou 2, l'élément annulaire (34) comportant, sur son côté orienté vers la plaque de support (32), au moins une rainure de décharge (52).

4. Broche supportée selon l'une des revendications précédentes, la première surface de contact (42) de l'élément annulaire (34), laquelle vient en contact avec la plaque de support (32), étant arrondie ou orientée suivant un premier angle d'inclinaison (α) entre 15° et 75° par rapport à l'axe médian longitudinal (36) du corps de broche (30).

5. Broche supportée selon l'une des revendications précédentes, la deuxième surface de contact (44) de l'élément annulaire (34), laquelle vient en contact avec le corps de broche (30), étant arrondie ou orientée suivant un deuxième angle d'inclinaison (β) entre 15° et 75° par rapport à l'axe médian longitudinal (36) du corps de broche (30).

6. Broche supportée selon l'une des revendications précédentes, le joint de soudure (40) s'étendant à une distance moyenne (dₘ) par rapport à l'axe médian longitudinal (36) du corps de broche (30) autour de l'axe médian longitudinal (36) du corps de broche (30), et le corps de broche (30) présentant, sur une région partielle encadrée par l'élément annulaire (34), une saillie (56), laquelle est réalisée de telle sorte qu'au moins une surface extérieure (58) de la saillie (56) s'étendant autour de l'axe médian longitudinal (36) du corps de broche (30) présente une distance minimale (sₘᵢₙ) par rapport à l'axe médian longitudinal (36) du corps de broche (30), laquelle distance minimale est supérieure à la distance moyenne (dₘ) du joint de soudure (40) par rapport à l'axe médian longitudinal (36) du corps de broche (30).

7. Broche supportée selon l'une des revendications 1 à 5, le joint de soudure (40) présentant une largeur moyenne (b₁) radialement par rapport à l'axe médian longitudinal (36) du corps de broche (30), et l'élément annulaire (34) étant serré entre la plaque de support (32) et le corps de broche (30) de telle sorte qu'un espace d'air (60) soit présent entre la région partielle, encadrée par l'élément annulaire (34), du corps de broche (30) et l'élément annulaire (34), lequel espace d'air présente une largeur d'espace moyenne (b₂) radialement par rapport à l'axe médian longitudinal (36) du corps de broche (30) qui est supérieure ou égale à un quart de la largeur moyenne (b₁) du joint de soudure (40) .

8. Dispositif comportant :
une broche supportée selon l'une des revendications précédentes ; et
un écrou de broche comportant un filetage d'écrou de broche dans lequel vient en prise un filetage de corps de broche (38) du corps de broche (30) ;
le corps de broche (30) étant maintenu de manière bloquée en rotation au moyen de la plaque de support (32), de telle sorte que la broche supportée soit réglable, au moyen de l'écrou de broche mis en rotation, le long d'un axe de réglage sur lequel l'axe médian longitudinal (36) du corps de broche (30) se situe.

9. Dispositif selon la revendication 8, le dispositif étant un dispositif de freinage de roue pouvant être disposé ou disposé au niveau d'une roue d'un véhicule ou un servofrein électromécanique pouvant être placé ou placé en amont d'un maître-cylindre de frein d'un système de freinage hydraulique.

10. Procédé de fabrication d'une broche supportée pour un dispositif équipé d'un écrou de broche, comportant les étapes de :
soudage d'un corps de broche (30), s'étendant le long de son axe médian longitudinal (36), de la broche supportée ultérieurement sur une plaque de support (32), de telle sorte qu'un joint de soudure (40) s'étendant autour de l'axe médian longitudinal (36) du corps de broche (30) soit formé entre le corps de broche (30) et la plaque de support (32) (S1) ;
**caractérisé par** l'étape de :
serrage d'un élément annulaire (34) encadrant une section partielle de l'axe médian longitudinal (36) du corps de broche (30), lequel élément annulaire vient en contact avec la plaque de support (32) sur au moins une première surface de contact (42) de l'élément annulaire (34) et avec le corps de broche (30) sur au moins une deuxième surface de contact (44) de l'élément annulaire (34), entre la plaque de support (32) et le corps de broche (30) (S2).
